# FASCICULE DE BREVET EUROPEEN

(11) **EP 2 440 339 B1**
(45) Date de publication et mention de la délivrance du brevet: **21.08.2013**
(21) Numéro de dépôt: 10737995.0
(22) Date de dépôt: 11.06.2010
(51) Int. Cl.: B64F 5/00, B08B 9/032, B64D 11/02

(54) **PROCEDE DE TRAITEMENT DU CIRCUIT D'EAU POTABLE D'UN AERONEF**
VERFAHREN ZUR BEHANDLUNG DES TRINKWASSERKREISLAUFES EINES FLUGZEUGES
METHOD FOR TREATING THE DRINKING WATER CIRCUIT OF AN AIRCRAFT

(30) Priorité: 12.06.2009 FR 0902870
(43) Date de publication de la demande: 18.04.2012
(73) Titulaire: Prodose, 31600 Bessieres (FR)
(72) Inventeur: BOUKARI, Morou, F-31300 Toulouse (FR)
(74) Mandataire: Richebourg, Michel François
(86) Numéro de dépôt international: PCT/FR2010/051170
(87) Numéro de publication internationale: WO 2010/142924

(56) Documents cités:
- DE-A1- 4 421 833
- DE-A1-102007 004 278
- US-A- 5 873 944
- US-A1- 2006 169 645
- US-A1- 2006 169 649

## Description

### DOMAINE D'APPLICATION DE L'INVENTION

La présente invention a trait au domaine des aéronefs et notamment aux adaptations permettant de réaliser le traitement du circuit d'eau potable des aéronefs.

### DESCRIPTION DE L'ART ANTÉRIEUR

Les aéronefs et notamment ceux susceptibles d'accueillir des passagers sont équipés d'un circuit de distribution d'eau potable (à des fins d'alimentation, hygiène, etc..) qui comprend au moins un réservoir et une pluralité de canalisations permettant de créer des points d'entrée ou de sortie mis à disposition des passagers et/ou des opérateurs.

Classiquement, les points de sortie d'eau tels ceux utilisés pour alimenter les robinets de lavage des mains ou ceux utilisés pour la restauration sont équipés de moyens de filtration à travers lesquels l'eau doit passer avant d'atteindre le robinet. Ces moyens de filtration se composent classiquement d'un bol (ou volume) fermé communiquant avec l'extrémité d'au moins deux canalisations dans lequel vient se placer une cartouche démontable de filtration. Une première canalisation vient amener l'eau et une autre l'évacue et communique avec ledit robinet, le dispositif étant conçu de sorte qu'une fois la cartouche montée, l'eau venant de la première canalisation passe à travers la cartouche avant de passer dans la deuxième canalisation et qu'une fois la cartouche démontée, l'eau issue de la première canalisation puisse quand même passer dans la deuxième canalisation. Ce bol est équipé d'une fermeture commandant son accès et autorisant le changement régulier de ladite cartouche.

Bien entendu, en addition du traitement de l'eau assuré par lesdits moyens de filtration et d'éventuels ajouts de désinfectant (chlore, dioxyde de chlore, peroxyde d'hydrogène, etc...) faiblement dosés dans l'eau, le circuit assurant la distribution de l'eau doit également faire l'objet d'un traitement régulier.

Ainsi par exemple, les documents US2006/169645, qui décrit un procédé selon le préambule de la revendication 1, et US 2006/169649 décrivent des procédés consistant à désinfecter l'eau par utilisation de chlore pour le premier et par utilisation d'ultraviolet pour le second.

Le traitement du circuit d'eau potable à l'intérieur d'un aéronef est classiquement réalisé en atelier selon le procédé consistant à la succession des opérations suivantes :
- les cartouches de filtrage sont enlevées,
- le réservoir de stockage est rempli d'un liquide de traitement,
- une circulation dudit liquide à l'intérieur du circuit est assurée notamment par ouverture des points de sortie d'eau afin d'assurer la présence du liquide de traitement dans l'ensemble du circuit et notamment à ses extrémités,
- une phase de repos est respectée permettant au liquide de produire ses effets et où ce dernier reste présent dans les canalisations,
- le liquide de traitement est vidangé,
- le circuit est rincé au moyen d'une eau faiblement traitée,
- les cartouches de filtration sont réinstallées ou sont changées et installées.

Or, il a été constaté que malgré le procédé ci-dessus décrit qui présente un grand nombre d'opérations et une durée particulièrement importante, l'eau analysée en sortie de circuit était susceptible de présenter un taux de contamination.

Un tel problème non encore résolu a soulevé une pluralité d'interrogations quant à la qualité du produit ou principe actif de traitement contenu dans le liquide de traitement, à la présence éventuelle d'un bio-film dans les canalisations, ou à la présence de dépôts d'impuretés.

### DESCRIPTION DE L'INVENTION

Partant de cet état de fait, la demanderesse a mené des recherches visant à proposer un procède de traitement, du circuit d'eau potable d'un aéronef selon la revendication 1 et résolvant les problèmes ci-dessus décrits en présentant une durée et un coût inférieurs et en réduisant à néant le risque de contamination du circuit. Ce procédé particulièrement novateur a permis à la demanderesse de concevoir un dispositif et un aéronef permettant de le mettre en oeuvre et de l'accueillir en présentant également des caractéristiques nouvelles et inventives.

Selon l'invention, le procédé de traitement du circuit d'eau potable d'un aéronef, ledit circuit étant du type de celui comprenant au moins un réservoir de stockage, une pluralité de canalisations proposant une pluralité de points d'entrée et de sortie de l'eau, et des moyens de filtration comprenant des cartouches de filtration démontables équipant certaines canalisations, est remarquable en ce qu'il consiste
- à ne pas retirer les cartouches de filtration,
- à remplir ledit réservoir au moyen d'un liquide de traitement,
- à faire circuler ledit liquide de traitement qui est de l'eau amenée à haute température dans le circuit avec les cartouches installées.

Cette caractéristique est particulièrement avantageuse et innovante pour plusieurs raisons.

Elle évite les opérations de montage et de démontage des cartouches ainsi que les opérations d'ouverture et de fermeture des bols (ou volume d'accueil) accueillant lesdites cartouches. En addition du temps économisé, la suppression de ces opérations évite qu'après passage du liquide de traitement, le circuit ne soit ouvert lors de l'ouverture des bols ce qui est une source de contamination. De plus, elle évite qu'un élément extérieur au circuit (la cartouche) donc source de contamination, ne soit placé après traitement dans le circuit. La suppression de ces opérations constitue le franchissement de plusieurs difficultés. En effet, les procédés de traitement de circuit d'eau potable d'un aéronef obéissent à des listes d'opérations avec une chronologie très précise qui requièrent tous, l'enlèvement de la cartouche.

De plus, il est connu que certains produits de traitement sont susceptibles d'être filtrés par les cartouches et qui diminue l'efficacité du traitement en aval desdits filtres.

En outre, la vérification d'un tel procédé de traitement exige le remplacement des filtres si les résultats d'analyse de l'eau en sortie ne sont pas ceux attendus.

L'obtention finale d'une eau sans contamination après mise en oeuvre du procédé, résultat vérifié par la demanderesse ont permis d'identifier que ce sont bien les opérations de changement de filtres qui, en ouvrant le circuit et en étant en contact avec l'extérieur, deviennent la cause des contaminations jusqu'ici constatées mais non expliquées.

Les principes actifs de désinfection font l'objet de recherches et il en est de même pour les technologies de filtration de sorte qu'un tel procédé peut parfaitement être mis en oeuvre sans que les capacités de filtration du filtre ne soient préjudiciables à la qualité du traitement de la portion de circuit se situant en aval de ce dernier.

Le fait que ledit liquide de traitement soit de l'eau amenée à haute température et notamment de l'eau potable présente d'autres avantages dont le fait d'éviter l'opération de rinçage prévue dans les procédés de traitement de l'art antérieur. L'utilisation d'une eau chaude comme liquide de traitement permet d'exploiter les cartouches déjà classiquement utilisées dans la filtration de l'eau potable d'un aéronef.

Le chauffage du liquide de traitement ne peut être envisagé dans les documents de l'art antérieur en ce que la technique de désinfection choisie ne le permet pas. Ainsi, une montée en température a pour conséquence de supprimer les caractéristiques désinfectantes du chlore et/ou de provoquer le dégagement de vapeurs toxiques susceptibles d'endommager le circuit d'eau. De plus, l'utilisation d'un liquide chaud est susceptible d'endommager la lampe à ultraviolet.

Selon une autre caractéristique particulièrement avantageuse de l'invention, ladite température se situe entre 60 et 90 degrés Celcius. Étant donnée que l'eau chaude constitue un très bon liquide de traitement du circuit d'eau potable, le procédé de l'invention qui est particulièrement court peut très bien être mis en oeuvre après un procédé plus classique.

L'utilisation d'eau chauffée dans un procédé de traitement du circuit d'eau potable a encore permis à la demanderesse de concevoir une caractéristique de procédé particulièrement avantageuse en ce qu'il consiste à utiliser l'eau déjà stockée ou utilisée dans le circuit de l'avion pour assurer le traitement du circuit. Il n'est alors plus nécessaire d'injecter à partir de l'extérieur le liquide de traitement dans le circuit. Bien entendu, les extrémités des canalisations (c'est à dire notamment les robinets disponibles dans l'avion) doivent pouvoir être ouvertes pour permettre la circulation ce qui peut être réalisé par des opérateurs en atelier. Bien entendu, à partir de l'instant où l'eau ne serait par encore ou plus stockée dans le circuit, un nouveau volume de cette eau (susceptible d'être stockée ou utilisée en conditions d'exploitation par le circuit d'eau potable de l'aéronef) serait injecté.

Néanmoins, la demanderesse en proposant les caractéristiques ci-dessus développées propose judicieusement un procédé de traitement consistant à assurer les phases de montée en température et de circulation de l'eau pendant le vol de l'aéronef. Ce procédé n'exige plus la mise en atelier de l'aéronef pour l'opération de traitement de circuit. Ce procédé est rendu possible du fait de la disponibilité du liquide dans le circuit et du fait que les passagers vont assurer la circulation de l'eau chaude et donc du liquide de traitement en utilisant les robinets du circuit.

Enfin, afin de résoudre l'éventuel excès de chaleur de l'eau pendant les phases de traitement conduites durant le vol de l'aéronef, le procédé est remarquable en ce qu'il consiste en extrémité de canalisation au niveau des points de sortie, à faire diminuer la température de l'eau à une valeur normale d'utilisation domestique.

Ainsi, un dispositif de traitement de l'eau permettant de mettre en oeuvre le procédé, comporte un moyen de chauffage de l'eau du circuit autorisant sa montée en température entre 60 et 90 degrés Celcius permettant ainsi le traitement du circuit. Cette caractéristique permet d'envisager un dispositif de traitement qui équipe classiquement un aéronef pour traiter son eau potable avec une fonctionnalité supplémentaire ayant pour objectif non le traitement de l'eau mais le traitement du circuit d'eau potable.

Selon une autre caractéristique particulièrement avantageuse, ce dispositif dans une version non embarquée comprend une chaudière associée à un échangeur de chaleur pour chauffer une canalisation dans laquelle va circuler une eau qui portée à haute température va être injectée dans le circuit d'eau potable de l'aéronef à l'arrêt. Une pompe à injection peut en outre venir ajouter des additifs de type anticorrosion, antitartre, désinfectant non chloré tels le peroxyde d'hydrogène et ses dérivés.

La chaudière peut être à fioul, à gaz, électrique etc...

Selon une autre caractéristique ce dispositif non embarqué comprend un module de connexion audit circuit d'eau potable de l'aéronef qui propose trois positions :
- une première position de vidange du réservoir d'eau potable de l'aéronef,
- une position d'injection de l'eau chaude dans ledit circuit,
- une position d'arrêt en cas de problèmes de pression mesurée dans ledit circuit.

De même, la demanderesse a imaginé un aéronef remarquable en ce qu'il est équipé d'un moyen de chauffage de l'eau de son circuit d'eau potable pour produire une eau chaude entre 60 et 90 degrés Celcius à des fins de traitement dudit circuit. Ce moyen de chauffage peut être disposé à tout endroit du circuit susceptible de voir l'ensemble du volume d'eau stockée circuler. Ainsi, un tel moyen est susceptible d'être intégré aux avions existants.

De même, comme expliqué plus haut l'aéronef est équipé d'un moyen de refroidissement de l'eau de son circuit d'eau potable.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un procédé, conforme à l'invention et d'un dispositif et d'un aéronef.

### BRÈVE DESCRIPTION DES DESSINS

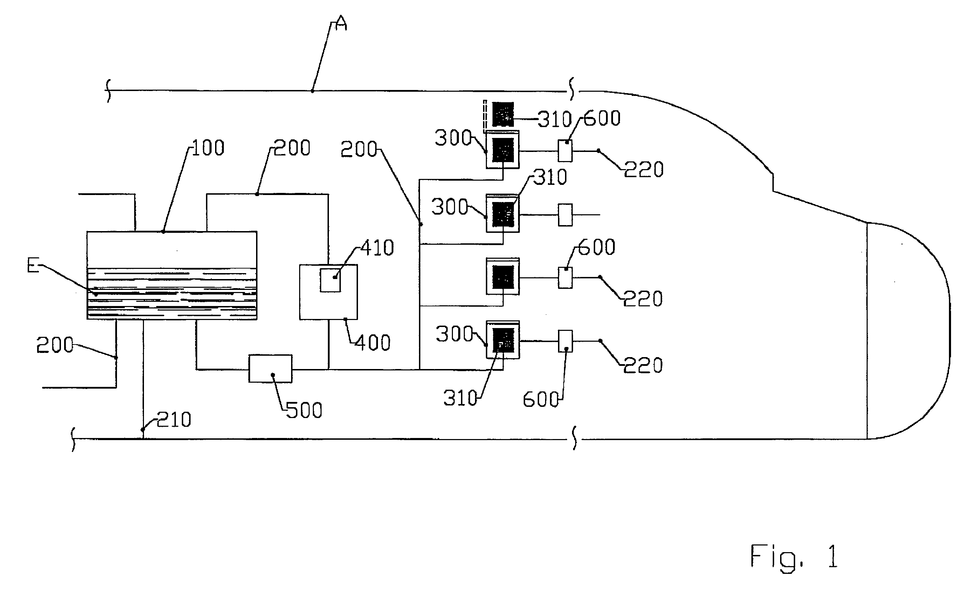

La figure 1 est un dessin schématique illustrant un circuit d'eau potable à l'intérieur d'un aéronef,
La figure 2 est un dessin schématique illustrant un mode de réalisation non embarqué du dispositif de traitement d'un circuit d'eau potable.

### DESCRIPTION DES MODES DE RÉALISATION PRÉFÉRÉS

Tel qu'illustré sur le dessin de la figure, l'aéronef référencé dans son ensemble A est équipé d'un circuit d'eau potable comprenant au moins un réservoir de stockage 100 de ladite eau E, une pluralité de canalisations 200 proposant une pluralité de points d'entrée 210 et de sortie 220 de l'eau, et des moyens de filtration 300 comprenant des cartouches de filtration 310 démontables. Comme illustré et comme classiquement, le circuit comporte un module 400 de traitement de l'eau.

Cette seule figure illustre plusieurs modes de réalisation.

Selon un premier mode de réalisation permettant de mettre en oeuvre le procédé de l'invention, le dispositif de traitement de l'eau 400 dont est équipé l'aéronef A est équipé d'un module supplémentaire 410 comportant un moyen de chauffage de l'eau du circuit passant par ledit module de traitement 400 et permettant sa montée en température entre 60 et 90 degrés Celcius afin d'assurer au moment souhaité le traitement du circuit. L'eau utilisée est alors l'eau potable E disponible dans l'aéronef qui va devenir liquide de traitement pour le circuit.

Selon un deuxième mode de réalisation, c'est l'aéronef A (et non le dispositif de traitement en lui-même ou alors de façon redondante) qui, dans son circuit d'eau potable, est équipé d'un moyen de chauffage de l'eau 500 pour produire une eau chaude entre 60 et 90 degrés Celcius à des fins de traitement dudit circuit.

Le procédé de traitement de l'invention consistant à faire circuler le liquide de traitement constitué par de l'eau faiblement traitée portée à haute température à travers tout le circuit et notamment à travers les cartouches de filtration 310, peut alors être mis en oeuvre avec l'avion à l'arrêt oubien de façon plus avantageuse, lors de ses phases de vol où comme expliqué plus haut, c'est la consommation de l'eau aux extrémités de sortie qui va permettre la circulation de l'eau dans l'ensemble du circuit.

Pour que la température de l'eau ne la rende pas inutilisable auxdites extrémités lors des phases de traitement, il est prévu conformément à l'invention, d'équiper lesdites extrémités de moyens de refroidissement 600.

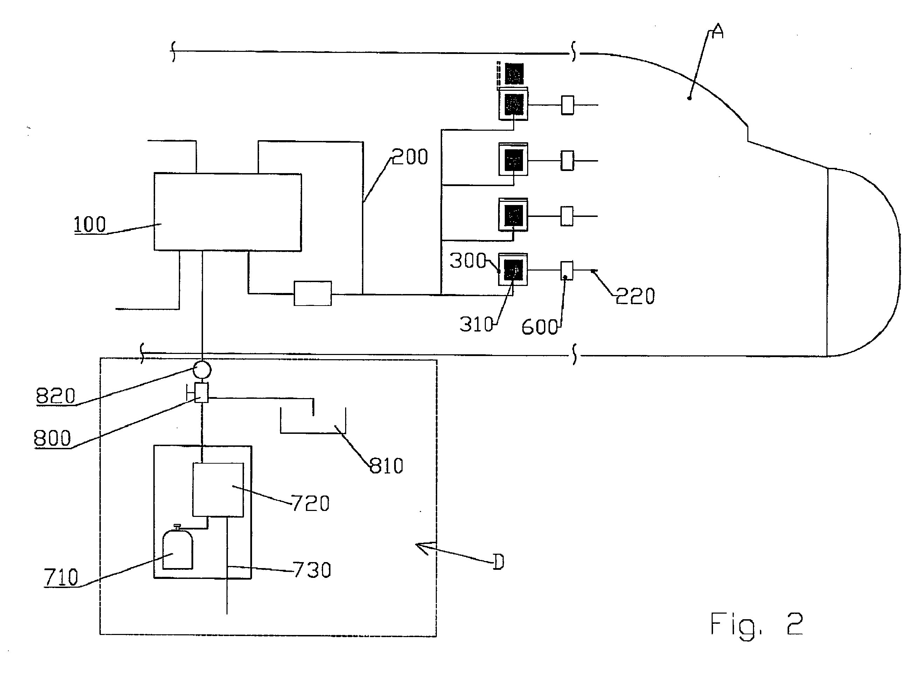

La figure 2 illustre un mode de réalisation du dispositif dans sa version non embarquée. Conformément à l'invention, Ce dispositif D comprend un réservoir de gaz inflammable 710 alimentant une chaudière associée à un échangeur de chaleur 720 utilisant la combustion du gaz pour chauffer une canalisation 730 dans laquelle va circuler une eau qui portée à haute température va être injectée dans le circuit d'eau potable 200 de l'aéronef (A) à l'arrêt. L'eau à chauffer peut être issue d'une source extérieure ou être celle présente dans l'aéronef.

Ce dispositif est associé à un module de connexion 800 audit circuit 200 d'eau potable de l'aéronef qui propose trois positions :
une première position de vidange du réservoir 100 d'eau potable de l'aéronef A dans un bac d'évacuation 810,
   - une position d'injection de l'eau chaude dans ledit circuit 200,
   - une position d'arrêt en cas de problèmes de pression mesurée dans ledit circuit au moyen d'une jauge de pression 820.

On comprend que le procédé, le dispositif et l'aéronef, qui viennent d'être ci-dessus décrits et représentés, l'ont été en vue d'une divulgation plutôt que d'une limitation. Bien entendu, divers aménagements, modifications et améliorations pourront être apportés aux exemples ci-dessus, sans pour autant sortir du cadre de l'invention.

## Revendications

1. Procédé de traitement du circuit d'eau potable d'un aéronef (A), ledit circuit étant du type de celui comprenant au moins un réservoir de stockage (100), une pluralité de canalisations (200) proposant une pluralité de points d'entrée (210) et de sortie (220) de l'eau, le procédé consistant
- à remplir ledit réservoir au moyen d'un liquide de traitement,
- à faire circuler ledit liquide de traitement qui est de l'eau amenée à haute température, dans le circuit, **CARACTÉRISÉ EN CE QUE** le circuit d'eau potable comprend des moyens de filtration (300) comprenant des cartouches de filtration (310) démontables équipant certaines canalisations, lesdites cartouches étant disposées dans les bols formant avec ces dernières, les moyens de filtration équipant les points de sortie d'eau tels ceux utilisés pour alimenter les robinets de lavage ou ceux utilisés pour la restauration dans les aéronefs, moyens de filtration à travers lesquels l'eau doit passer avant d'atteindre le robinet et **EN CE QU'**
il consiste
- à ne pas retirer les cartouches de filtration (310),
- à faire circuler ledit liquide de traitement dans le circuit avec les cartouches (310) installées.

2. Procédé de traitement selon la revendication 1 et/ou 3, **CARACTÉRISÉ PAR LE FAIT QUE** ladite température se situe entre 60 et 90 degrés Celcius.

3. Procédé de traitement selon la revendication 1, **CARACTÉRISÉ EN CE QU'**il consiste à utiliser l'eau (E) déjà stockée ou utilisée dans le circuit de l'aéronef (A) pour assurer le traitement du circuit.

4. Procédé de traitement selon la revendication 1, **CARACTÉRISÉ EN CE QU'**il consiste à assurer les phases de montée en température et de circulation de l'eau (E) pendant le vol de l'aéronef (A).

5. Procédé de traitement selon la revendication 1, **CARACTÉRISÉ EN CE QU'**il consiste en extrémité de canalisation au niveau des points de sortie (220), à faire diminuer la température de l'eau (E) à une valeur normale d'utilisation domestique.

## Patentansprüche

1. Verfahren zur Behandlung des Trinkwasserkreislaufs eines Flugzeugs (A), wobei der Kreislauf vom Typ dessen ist, der mindestens einen Lagerbehälter (100) aufweist, wobei eine Vielzahl von Leitungen (200) eine Vielzahl von Eintritts- (210) und Austrittspunkten (220) des Wassers bereitstellen, wobei das Verfahren aus Folgendem besteht:
- Füllen des Behälters mit Hilfe einer Behandlungsflüssigkeit,
- Zirkulieren der Behandlungsflüssigkeit, wobei es sich um Wasser, zugeführt mit hoher Temperatur, handelt, im Kreislauf, **dadurch gekennzeichnet, dass** der Trinkwasserkreislauf Filtermittel (300) umfasst, umfassend abmontierbare Filterpatronen (310), die bestimmte Leitungen ausstatten, wobei die Patronen in den Schalen angeordnet sind, die sich mit diesen Letzteren bilden, wobei die Filtermittel die Ausgangspunkte des Wassers ausstatten, wie z.B. diejenigen, die verwendet werden, um die Waschhähne oder diejenigen zu versorgen, die für die Restauration in den Flugzeugen verwendet werden, wobei das Wasser durch die Filtermittel passieren muss, bevor es den Wasserhahn erreicht, und dadurch, dass es darin besteht:
- die Filterpatronen (310) nicht zu entfernen,
- die Behandlungsflüssigkeit im Kreislauf mit den installierten Patronen (310) zirkulieren zu lassen.

2. Verfahren zur Behandlung nach Anspruch 1 und/oder 3, **dadurch gekennzeichnet, dass** die Temperatur zwischen 60 und 90 Grad Celsius liegt.

3. Verfahren zur Behandlung nach Anspruch 1, **dadurch gekennzeichnet, dass** es darin besteht, das Wasser (E), das im Kreislauf des Flugzeugs (A) bereits gelagert ist oder verwendet wird, zu verwenden, um die Behandlung des Kreislaufs sicherzustellen.

4. Verfahren zur Behandlung nach Anspruch 1, **dadurch gekennzeichnet, dass** es darin besteht, die Phasen des Temperaturanstiegs und der Zirkulierung des Wassers (E) während des Flugs des Flugzeugs (A) sicherzustellen.

5. Verfahren zur Behandlung nach Anspruch 1, **dadurch gekennzeichnet, dass** es darin besteht, am Ende der Leitung auf der Ebene der Ausgangspunkte (220) die Temperatur des Wassers (E) auf einen normalen Wert der Haushaltsverwendung sinken zu lassen.

## Claims

1. Method for treating the drinking water circuit of an aircraft (A), said circuit being of the type of that comprising at least one storage tank (100), a plurality of pipes (200) providing a plurality of water inlet (210) and outlet (220) points, with the method consisting in
- filling said tank with a treatment liquid,
- circulating said treatment liquid, which consists of water brought to a high temperature, in the circuit, **characterised in that** the drinking water circuit comprises means of filtration (300) comprising removable filtration cartridges (310) provided on certain pipes, said cartridges being arranged in bowls forming with the latter, the means of filtration provided on the water outlet points such as those used to supply the washing taps or those used for food services in aircraft, means of filtration through which the water must pass before reaching the tap and **in that** it consists in
- not removing the filtration cartridges (310),
- circulating said treatment liquid in the circuit with the cartridges (310) installed.

2. Method for treating according to claim 1 and/or 3, **characterised by** the fact that said temperature is between 60 and 90 degrees Celsius.

3. Method for treating according to claim 1, **characterised in that** it consists in using the water (E) already stored or used in the circuit of the aircraft (A) in order to provide the treatment of the circuit.

4. Method for treating according to claim 1, **characterised in that** it consists in providing the phases of increasing the temperature and of circulating the water (E) during the flight of the aircraft (A).

5. Method for treating according to claim 1, **characterised in that** it consists at the end of the pipe on the outlet points (220), in decreasing the temperature of the water (E) to a normal value for domestic use.
